# EUROPÄISCHE PATENTSCHRIFT

(11) **EP 3 029 826 B1**
(45) Veröffentlichungstag und Bekanntmachung des Hinweises auf die Patenterteilung: **04.04.2018**
(21) Anmeldenummer: 14196445.2
(22) Anmeldetag: 05.12.2014
(51) Int. Cl.: H02P 6/16

(54) **Verfahren zur Bestimmung eines Kommutierungswinkels**
Method for determining a commutation angle
Procédé de détermination d'un angle de commutation

(43) Veröffentlichungstag der Anmeldung: 08.06.2016
(73) Patentinhaber: ETEL S.A., 2112 Môtiers (CH)
(72) Erfinder: Coleman, Ralph, 2114 Fleurier (CH)
(74) Vertreter: Pleyer, Hans Anno

(56) Entgegenhaltungen:
- EP-A2- 0 784 378
- DE-A1- 4 437 793
- DE-A1- 10 213 375
- DE-A1- 10 226 974
- SCHRODL M: "SENSORLESS CONTROL OF PERMANENT-MAGNET SYNCHRONOUS MACHINES AT ARBITRARY OPERATING POINTS USING MODIFIED INFORM FLUX MODEL", EUROPEAN TRANSACTIONS ON ELECTRICAL POWER ENGINEERING, VDE VERLAG, DE, Bd. 3, Nr. 4, 1. Juli 1993 (1993-07-01), Seiten 277-283, XP000398518, ISSN: 0939-3072

## Beschreibung

### GEBIET DER TECHNIK

Die vorliegende Erfindung betrifft ein Verfahren zur Bestimmung eines Kommutierungswinkels. Solche Verfahren finden bei der Ansteuerung eines permanent erregten Synchronmotors Anwendung.

### STAND DER TECHNIK

Um einen permanent erregten Synchronmotor feldorientiert anzusteuern, muss die Lage des Rotors bezüglich des Stators bekannt sein. Man spricht dabei von einer Winkellage innerhalb einer magnetischen Periode des Motors, oder auch vom sogenannten Kommutierungswinkel. Da rotatorische Synchronmotoren oft viele (z.B. n) Polpaare aufweisen, entsprechen mehrere (also n) magnetische Perioden einer vollständigen mechanischen Umdrehung eines rotierenden Motors. Auch Linearmotoren weisen periodische Magnetfelder auf, so dass auch hier von einem Kommutierungswinkel innerhalb einer magnetischen Periode gesprochen wird.

Die Position eines Rotors im rotierenden Motor oder eines Läufers im Linearmotor (im Folgenden einfach mit Rotor bezeichnet) wird oft mit einem Positionsmessgerät erfasst. Dieses kann absolut oder inkremental messen, und so eine Information über die Bewegung des Rotors liefern. Bei inkrementalen Positionsmessgeräten fehlt aber nach jedem Einschalten, bei absoluten Messgeräten zumindest nach dem Anbau des Messgeräts die Information, unter welchem Winkel der Rotor relativ zu einer magnetischen Periode des Motors steht. Der Kommutierungswinkel wird jedoch benötigt, um einen Stromvektor an den Motor anlegen zu können, dessen momentbildende und feldbildende Komponenten wie benötigt zum Rotor ausgerichtet sind.

Zur Feststellung des Kommutierungswinkels sind aus dem Stand der Technik zahlreiche Verfahren bekannt. Neben den zahlreichen Verfahren, die den Kommutierungswinkel über eine Messung von elektrotechnischen Größen wie der Induktivität oder der magnetischen Sättigung bestimmten, gibt es auch viele Verfahren, die auf einer Bestromung des Motors und die Feststellung von mehr oder weniger großen Auslenkungen des Rotors beruhen.

Aus der DE 10213375 A1 ist es bekannt, einem Synchronmotor unter feldorientierter Regelung von außen eine Bewegung einzuprägen, und dabei dem Regelkreis einen Sollstrom von null vorzugeben. Vom Regelkreis werden daher Spannungen erregelt, die den im Motor durch die Bewegung induzierten Spannungen entgegen wirken. Aus der Phasenlage dieser Spannungen kann auf den Kommutierungswinkel geschlossen werden. Jedoch sind für dieses Verfahren größere Bewegungen des Rotors notwendig, die nicht immer möglich sind.

Aus der EP 1495535 B1 ist es bekannt, einem durch eine Motorbremse festgehaltenen Motor Stromvektoren unterschiedlicher Richtung einzuprägen, und kleinste Auslenkungen des Rotors, die durch Elastizitäten in der Mechanik trotz der Motorbremse möglich sind, nach Betrag und Richtung mit einem Positionsmessgerät zu erfassen. Trägt man diese Auslenkung über dem Winkel der Stromvektoren auf, so lässt sich auf den Kommutierungswinkel schließen. Die größte Auslenkung lässt sich nämlich erzielen, wenn Rotor und Stromvektor senkrecht aufeinander stehen. Dieses Verfahren erfordert jedoch zwingend einen festgehaltenen Rotor und eignet sich nicht für Systeme in Bewegung.

In der DE 4437793 A1 ist ein zweistufiges Verfahren zur Bestimmung der Phasenlage des Rotors beschrieben, bei dem die Phasenlage zunächst grob und dann fein bestimmt wird. Dabei werden kleine, durch Anlegen von Stromvektoren verursachte Auslenkungen des zunächst ruhenden Rotors erfasst und daraus dessen Phasenlage bestimmt.

Eine weitere Möglichkeit zur Feststellung des Kommutierungswinkels besteht darin, an den Synchronmotor einen momentbildenden Strom in einer beliebig gewählten Orientierung anzulegen. Der Rotor wird sich dann bewegen und parallel zu dieser Richtung ausrichten. Damit sind seine Lage und der Kommutierungswinkel bekannt. Solche Verfahren sind aber dann nachteilig, wenn größere Bewegungen des Rotors nicht erwünscht sind, oder wenn die Bewegung des Rotors mit sehr wenig Reibung behaftet ist, denn dann dauert es sehr lange, bis der Rotor in der gewünschten Position eingeschwungen ist.

Es sind daher auch Verfahren bekannt geworden, bei denen sich nicht der Rotor zu einem angelegten Stromvektor ausrichtet, sondern vielmehr der Winkel des Stromvektors mittels eines Regelkreises so eingestellt wird, dass er sich zum Rotor ausrichtet, der dabei nur kleine Bewegungen um seine Ausgangslage ausführt. So ist es aus der EP 0784378 A2 bekannt, einen Stromvektor zunächst in einer beliebigen Richtung einzuprägen, und dabei eine Drehzahl von null vorzugeben. Ein PI-Regler, an dessen Eingang die Abweichung der gemessenen Drehzahl von der Solldrehzahl (also null) anliegt, gibt einen Korrekturwinkel aus, um den die Richtung des angelegten Stromvektors korrigiert werden muss, um die Drehzahl auf dem Sollwert null zu halten. Kleine Bewegungen des Rotors werden also erfasst und sogleich ausgeregelt, so dass der Rotor keine größeren Bewegungen ausführt. Nach einer kurzen Einschwingzeit ist der vom PI-Regler ausgegebene Winkel konstant und entspricht dem gesuchten Kommutierungswinkel. Beim Testen solcher Verfahren wurde jedoch festgestellt, dass unter bestimmten Bedingungen eine zuverlässige Erfassung des Kommutierungswinkels nicht möglich war. Insbesondere bei in Bewegung befindlichen Systemen mit geringer Reibung schlug dieses Verfahren fehl, weil sich der Kommutierungsoffset nicht auf einen festen Wert einpendelte. Dies war z.B. bei einem luftgelagerten Linearmotor der Fall, der sich mit einer Anfangsgeschwindigkeit bewegte.

### ZUSAMMENFASSUNG DER ERFINDUNG

Es ist daher Aufgabe der Erfindung, ein Verfahren zur Bestimmung eines Kommutierungswinkels in einem permanent erregten Synchronmotor anzugeben, das auch im Falle einer von null verschiedenen Anfangsgeschwindigkeit des Motors zuverlässig ein korrektes Ergebnis liefert.

Diese Aufgabe wird gelöst durch ein Verfahren gemäß Anspruch 1. Vorteilhafte Details dieses Verfahrens ergeben sich auch aus den von Anspruch 1 abhängigen Ansprüchen.

Es wird ein Verfahren zur Bestimmung eines Kommutierungswinkels in einem permanent erregten Synchronmotor beschrieben, wobei der Kommutierungswinkel die Lage eines Rotors innerhalb einer magnetischen Periode des Synchronmotors angibt und zur feldorientierten Bestromung des Synchronmotors verwendet wird. Das Verfahren umfasst die Schritte:
- Festlegen eines beliebigen Kommutierungswinkels als Ausgangspunkt des Verfahrens,
- Einprägen eines Stromvektors in den Motor unter Verwendung des zunächst beliebig festgelegten Kommutierungswinkels,
- Feststellen einer Lageabweichung des Rotors,
- Verändern des zur Bestromung verwendeten Kommutierungswinkels mittels einer Reglerstruktur, um der festgesellten Lageabweichung entgegen zu wirken, so dass nach einer Einschwingzeit der sich einstellende Kommutierungswinkel dem tatsächlichen Kommutierungswinkel des Rotors entspricht, wobei bei der Feststellung der Lageabweichung des Rotors eine Anfangsgeschwindigkeit des Rotors berücksichtigt wird.

Entscheidend ist die Berücksichtigung einer Anfangsgeschwindigkeit des Rotors. Hat das Verfahren aus dem Stand der Technik versucht, jedwede Auslenkung des Rotors R aus seiner Ausgangsposition zu kompensieren, so berücksichtigt das verbesserte Verfahren eine Anfangsgeschwindigkeit des Rotors. Es wird nun versucht, jede Abweichung der Rotorlage von der aufgrund seiner Ausgangsposition und seiner Anfangsgeschwindigkeit zu erwartenden Position über einen Regler auszugleichen, so dass sich der vom Regler ausgegebene Winkel dem gesuchten Wert annähert. Dabei ist stets zu berücksichtigen, dass sich der Rotor während des Verfahrens ständig weiter bewegt.

Mit dem erfindungsgemäßen Verfahren kann der Kommutierungswinkel auch für die beschriebenen reibungsarm gelagerten Motoren trotz einer Anfangsgeschwindigkeit des Rotors zuverlässig aufgefunden werden.

Ausführungsbeispiele und weitere vorteilhafte Ausgestaltungen der Erfindung finden sich in der folgenden Beschreibung der Figuren.

### KURZE BESCHREIBUNG DER ZEICHNUNGEN

### Dabei zeigt

- Figur 1: eine schematische Darstellung eines Synchronmotors,
- Figur 2: Probleme bei der Erfassung des Kommutierungswinkels bei verschiedenen Anfangsgeschwindigkeiten des Rotors gemäß einem Verfahren aus dem Stand der Technik,
- Figur 3: eine Reglerstruktur zur Feststellung des Kommutierungswinkels gemäß der Erfindung,
- Figur 4: ein Detail der Reglerstruktur gemäß der Erfindung,
- Figur 5: die erfolgreiche Erfassung des Kommutierungswinkels bei verschiedenen Anfangsgeschwindigkeiten des Rotors.

### BESCHREIBUNG DER AUSFÜHRUNGSFORMEN

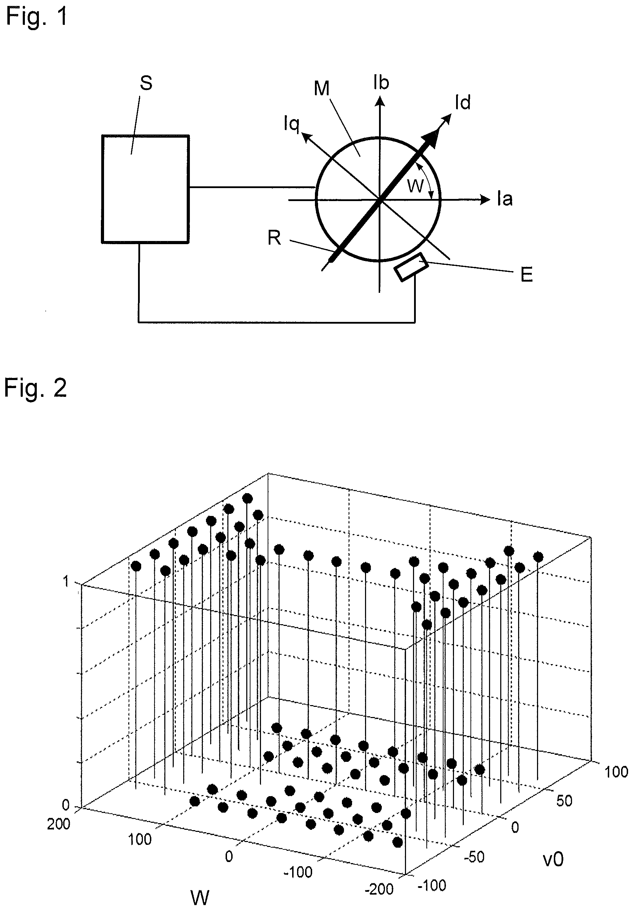

Die Figur 1 zeigt schematisch einen permanent erregten Synchronmotor M, dem von einer Ansteuerung S Strom eingeprägt wird. Ein Positionsmessgerät E stellt dabei die mechanische Lage des Rotors R im Motor M fest und meldet diese Lage an die Ansteuerung S.

Zur feldorientierten Ansteuerung wird ein momentbildender Strom Iq vorgegeben, der senkrecht auf dem Rotor R steht, sowie ein Magnetisierungsstrom Id, der parallel zum Rotor R ausgebildet ist. Der Gesamtstrom kann als Vektor mit den Komponenten Iq und Id betrachtet werden, wobei sich das Koordinatensystem mit der Iq- und Id-Achse mit dem Rotor dreht.

Zur Ansteuerung des Motors M muss dann eine Umrechnung des Stromvektors vom sich mit dem Rotor R drehenden System in ein ortsfestes System mit den Achsen Ia und Ib vorgenommen werden. Hierzu muss jederzeit der sich mit der Drehung des Rotors R veränderliche Winkel W bekannt sein, der als Kommutierungswinkel W bezeichnet wird. Diese aus dem Stand der Technik bestens bekannte Umrechnung wird auch als Park-Transformation bezeichnet.

Es ist zu beachten, dass solche Motoren M oft mehrere magnetische Perioden (also Polpaare) aufweisen, so dass eine vollständige Bewegung des Stromvektors bzw. Rotors R durch eine magnetische Periode nur einer teilweisen mechanischen Umdrehung entspricht. Ein Motor M mit zwei Polpaaren hat sich mechanisch erst um 180 Grad gedreht, wenn der Rotor R eine vollständige magnetische Periode durchlaufen hat.

Wichtig ist es festzuhalten, dass für die Park-Transformation jederzeit der Kommutierungswinkel W bekannt sein muss. Dieser kann anhand des Positionsmessgerätes E erfasst werden, wenn nur vorher die mechanische Position des Rotors R in Beziehung gesetzt wurde zu der Position des Rotors R innerhalb einer magnetischen Periode des Motors M. Mehrere hierfür verwendete Verfahren aus dem Stand der Technik wurden eingangs erwähnt.

Die Erfindung geht aus von der oben zitierten EP 0784378 A2, bei der mittels einer Reglerstruktur ein Kommutierungsoffset erregelt wird, wobei größere Auslenkungen des Rotors vermieden werden. Es wurde jedoch festgestellt, dass solche Verfahren unter bestimmten Bedingungen versagen, indem sich auch nach längerer Zeit kein stabiler Kommutierungswinkel einstellt. Als problematisch haben sich dabei besonders reibungsarm gelagerte Systeme mit einer von null verschiedenen Anfangsgeschwindigkeit herausgestellt. So ist es beispielsweise bei einem Luftgelagerten Linearmotor mit einem Kabelschlepp am Motor nicht einfach möglich, eine Anfangsgeschwindigkeit von null zu erhalten, da hier Kräfte auf den Rotor wirken und zu Bewegungen führen.

Die Figur 2 zeigt, dass es nur für bestimmte Kombinationen aus einer Anfangsgeschwindigkeit v0 (in beliebigen Einheiten) und einem zunächst unbekannten Kommutierungswinkel W (in Grad) gelingt, diesen Kommutierungswinkel W erfolgreich festzustellen. Diese Kombinationen sind mit dem Zuordnungswert 1 in der Figur 2 dargestellt. In den übrigen Fällen konvergiert der durch die Reglerstruktur erhaltene Kommutierungswinkel nicht, das Verfahren schlägt fehl. Diese Punkte sind mit dem Zuordnungswert 0 dargestellt. Es fällt auf, dass das Verfahren zwar für einen ruhenden Rotor R immer erfolgreich ist, aber in vielen Fällen versagt, wenn die Anfangsgeschwindigkeit v0 verschieden von null ist.

Im Folgenden wird daher ein Verfahren zum Feststellen des Kommutierungswinkels W beschrieben, das auch bei einer Anfangsgeschwindigkeit v0 verschieden von null für alle möglichen Kommutierungswinkel W zuverlässig die Bestimmung des jeweiligen Kommutierungswinkels W ermöglicht. Dieses Verfahren wird anhand von Schaltbildern erklärt, die den Ablauf des Verfahrens symbolisieren. Die konkrete Implementierung des Verfahrens spielt jedoch keine Rolle. In modernen Systemen S zur Ansteuerung eines Motors M werden solche Verfahren üblicherweise in Software implementiert, die bei Bedarf aktiviert wird.

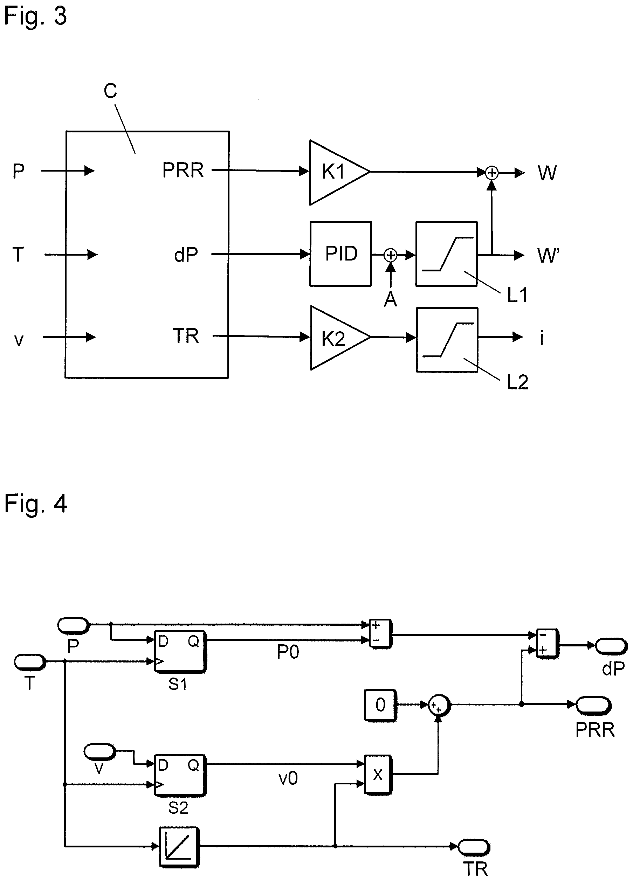

In der Figur 3 ist eine Recheneinheit C gezeigt, die folgende Eingangswerte entgegen nimmt:
- Die aktuelle Position P des Rotors R. Diese kann mit dem Positionsmessgerät E ermittelt werden.
- Die aktuelle Geschwindigkeit v des Rotors R. Diese kann mittels zeitlicher Ableitung des Positionswerts P ermittelt werden.
- Ein Triggersignal T, mit dem der Beginn des Verfahrens zur Ermittlung des Kommutierungswinkels ausgelöst wird, indem sich das Triggersignal T von "0" auf "1" ändert.

Die Recheneinheit gibt folgende Werte aus:
- Den Wert einer Positionsreferenzrampe PRR, die einem Weg entspricht, den der Rotor R aufgrund seiner Anfangsgeschwindigkeit v0 zum Zeitpunkt des Umschalten des Triggersignals T bis zum aktuellen Zeitpunkt zurückgelegt hat. Anders ausgedrückt würde man erwarten, dass sich der Rotor R aufgrund seiner Ausgangsgeschwindigkeit v0 seit dem Start des Verfahrens um PRR weiterbewegt hat.
- Die Lageabweichung dP des Rotors R von seiner erwarteten Lage entsprechend der Positionsreferenzrampe PRR. Mit einer Anfangsgeschwindigkeit v0 = 0 würde dP den Abstand von der Ruhelage angeben.
- Eine Zeitrampe TR, die die seit dem Triggersignal T vergangene Zeit angibt.

Wie die drei Ausgabewerte PRR, dP und TR aus den Eingabewerten P, v und T ermittelt werden können, ist weiter unten anhand der Figur 4 erläutert.

Die von der Recheneinheit C ausgebebenen Werte werden wie folgt weiter verarbeitet:
Die Lageabweichung dP des Rotors R von seiner gemäß der Positionsreferenzrampe PRR erwarteten Lage wird einem Regler PID zugeführt, der versucht, diese Lageabweichung dP möglichst auf null zu regeln, indem an seinem Ausgang ein Kommutierungsoffset W' zur Verfügung gestellt wird, der die Lage des Rotors R wiedergibt, jedoch unter Vernachlässigung der Anfangsgeschwindigkeit v0 des Rotors R. Kleine Auslenkungen des Rotors R werden von der Ansteuerung S ausgeregelt, was aber nur vollständig gelingen kann, wenn der Regler PID den Kommutierungsoffset W' korrekt ausgibt. Solange dies noch nicht der Fall ist, sind kleine Auslenkungen unausweichlich, erlauben es aber dem Regler PID, den Kommutierungsoffset W' nachzuführen, und so nach einer Einschwingzeit den korrekten Kommutierungsoffset W' auszugeben.

Beim Regler PID kann es sich um einen fachüblichen PID - Regler mit einem proportionalen, einem integralen und einem differentiellen Anteil handeln. Die aufintegrierte Positionsabweichung im Integralteil des Reglers PID sollte dabei auf einen Wert im Bereich +/- 180 Grad bezogen auf eine magnetische Periode begrenzt werden. Im Differenzialteil des Reglers PID können Tiefpassfilter vorgesehen werden, die aus der nach der Zeit abgeleiteten Positionsabweichung solche Frequenzen herausfiltern, die zu mechanischen Resonanzen und damit sogar zu einem Versagen des Verfahrens führen können. Das Rauschen der Positionsmessung wird nämlich durch die Ableitung im Differentialteil des Reglers PID bei höheren Frequenzen erheblich verstärkt.

Der vom Regler PID ausgegebene Kommutierungsoffset W' wird außerdem noch durch einen Begrenzer L1 auf einen Wertebereich von +/- 225 Grad eingeschränkt. Alle möglichen Stellungen des Rotors R innerhalb einer magnetischen Periode liegen innerhalb dieses Bereiches, der Begrenzer verhindert damit ein "Weglaufen" des Kommutierungsoffsets W', falls das Verfahren fehlschlägt.

Um nun den aktuellen Kommutierungswinkel W zu erhalten, der die Anfangsgeschwindigkeit v0 des Rotors R berücksichtigt und sich mit der Bewegung des Rotors R verändert, wird der Wert der Positionsreferenzrampe PRR, die den seit Beginn des Verfahrens (seit dem Auslösen des Triggers T) zurückgelegten Weg angibt, mit einem Faktor K1 multipliziert, um den auf mechanische Umdrehungen des Rotors R bezogenen Weg umzurechnen in Umdrehungen bezogen auf eine magnetische Periode des Motors M. Für einen rotierenden Motor M mit vier Polpaaren wäre dieser Faktor K1 = 4. Zu diesem Wert wird außerdem der vom Regler PID ausgegebene (und nach dem Einschwingen des Reglers PID konstante) Kommutierungsoffset W' addiert, um so die sich wegen der Anfangsgeschwindigkeit v0 ständig ändernde Rotorlage innerhalb einer magnetischen Periode des Motors M als aktuellen Kommutierungswinkel W zu erhalten. Das Ergebnis dieser Addition ist also der Kommutierungswinkel W, anhand dessen die Ansteuerung S eine Park-Transformation zur Bestromung des Motors M durchführen kann.

Im Falle der Ansteuerung eines Linearmotors dient der Faktor K1 dazu, eine in einer Längeneinheit gegebene magnetische Periode τ des Linearmotors (z.B. 64 mm) in einen Kommutierungswinkel zur Ansteuerung des Linearmotors umzurechnen. Für K1 gilt daher K1 = 360°/τ.

Die Zeitrampe TR wird mit einem Faktor K2 multipliziert, um einen mit der Zeit ansteigenden Strom zu erhalten, der als Vorgabe für den in den Motor M eingeprägten Stromvektor i verwendet wird. Dieser Stromvektor i wird außerdem durch einen Begrenzer L2 limitiert, so dass z.B. in den ersten 10 Millisekunden des Verfahrens der Betrag des Stromvektors i auf seinen Maximalwert ansteigt und dort verharrt, bis der Regler PID eingeschwungen und der Kommutierungswinkel W gefunden ist. Dank dieses ansteigenden Stromes läuft das Verfahren sanfter an, heftige Ausschläge des Rotors R wegen eines zu Beginn völlig falsch eingestellten Kommutierungswinkels W werden vermieden.

Da es außerdem ungünstige Stellungen des Rotors R bezüglich des angelegten Stromvektors i gibt, in denen kein Drehmoment erzeugt wird (wenn Stromvektor und Rotor R parallel liegen), und somit auch der Regler PID mangels Auslenkung keinen Anhaltspunkt für nötige Korrekturen des Kommutierungsoffsets W' hat, empfiehlt es sich, auf den Ausgang des Reglers PID zu Beginn des Verfahrens ein Störsignal A aufzuschalten. Dieses Störsignal kann z.B. einem Winkelbereich von 0 - 90 Grad entsprechen, der in Form einer linearen Rampe innerhalb einer halben Sekunde zwischen dem Regler PID und Begrenzer L1 aufgeschaltet wird. Dies sollte sofort nach dem Triggersignal T geschehen und abgeschlossen sein, noch bevor der Regler PID eingeschwungen ist. Da der Regler PID dieses Störsignal A umgehend ausregelt, bewegt sich der Rotor dadurch nur sehr wenig.

In der Figur 4 ist dargestellt, wie die Recheneinheit C aus den oben erläuterten Eingangswerten P, T, v die Ausgangswerte PRR, dP und TR bildet.

Zunächst erkennt man in der Figur 4, dass sowohl die aktuelle Position P als auch die aktuelle Geschwindigkeit v jeweils einem Auffangspeicher S1 bzw. S2 (auch als Latch - Schaltung bezeichnet) zugeführt sind. Schaltet das Triggersignal T um, werden die beiden Werte im jeweiligen Auffangspeicher S1, S2 festgehalten und als Anfangsposition P0 bzw. Anfangsgeschwindigkeit v0 zur weiteren Verarbeitung zur Verfügung gestellt.

Zudem wird das Triggersignal T aufintegriert, so dass dieses Integral die seit dem Umschalten des Triggersignals T vergangene Zeit TR liefert. Diese Zeit TR wird wie oben beschrieben als Ausgangswert TR ausgegeben.

Das Produkt aus der Anfangsgeschwindigkeit v0 und der seit dem Umschalten des Triggersignals T vergangenen Zeit TR wird als Positionsreferenzrampe PRR wie oben beschrieben ausgegeben.

Die Differenz des aktuellen Positionswerts P und der im Auffangspeicher S1 festgehaltenen Ausgangsposition P0 wird von der Positionsreferenzrampe PRR abgezogen und als Ausgangswert dP wie oben beschrieben ausgegeben.

Die hier vorgenommene Einteilung in eine Reglerstruktur gemäß Figur 3 und eine Recheneinheit C gemäß Figur 4 ist willkürlich gewählt, die einzelnen Funktionalitäten können auf verschiedenste Weisen implementiert werden. Entscheidend ist die Berücksichtigung einer Anfangsgeschwindigkeit v0. Hat das Verfahren aus dem Stand der Technik bisher versucht, jedwede Auslenkung des Rotors R aus seiner Ausgangsposition zu kompensieren, so berücksichtigt das verbesserte Verfahren eine Anfangsgeschwindigkeit v0 des Rotors. Es wird nun versucht, jede Abweichung der Rotorlage von der aufgrund seiner Ausgangsposition PO und seiner Anfangsgeschwindigkeit v0 zu erwartenden Position über eine Anpassung des Kommutierungsoffset W' auszugleichen.

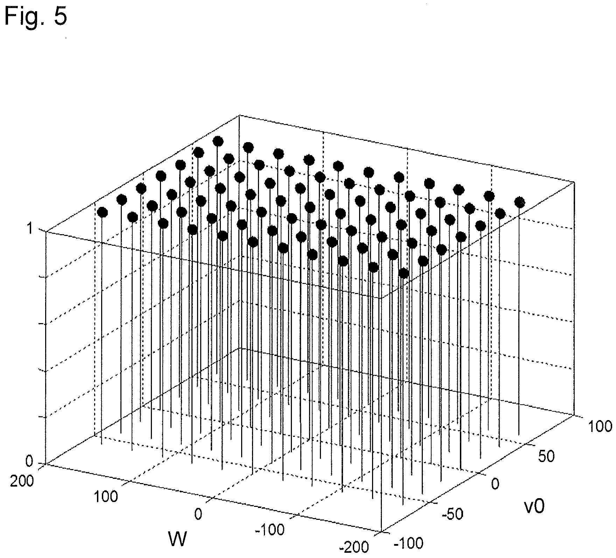

Den Erfolg dieser Maßnahme zeigt die Figur 5. Wie im Vergleich mit der Figur 2 sofort zu erkennen ist, wird nun in allen Fällen der Kommutierungswinkel W korrekt ermittelt, unabhängig vom gesuchten Kommutierungswinkel W und der Anfangsgeschwindigkeit v0.

Das hier beschriebene Verfahren bewirkt nicht, dass der Rotor R abgebremst wird. Vielmehr wird eine gewisse Reibung sogar ausgeglichen und der Rotor R auf seiner Anfangsgeschwindigkeit v0 gehalten. In Systemen mit nicht vernachlässigbarer Reibung empfiehlt es sich daher, die erwartete Abbremsung des Rotors R zu berücksichtigen. So könnte in der Recheneinheit C ein Modell für die Reibung eingebaut werden, so dass der Wert der Positionsreferenzrampe PRR die durch die Reibung verursachte Abbremsung berücksichtigt. So ein Modell muss die Trägheit des Rotors R und die herrschende Reibungskraft gemäß dem zweiten Newtonschen Gesetz in eine negative Beschleunigung umrechnen.

Eine Abbremsung des Rotors R kann nach der erfolgreichen Ermittlung des Kommutierungswinkels W von der Ansteuerung S durchgeführt werden, falls dies erwünscht ist.

Auch wenn die Beschreibung der Erfindung hier vorwiegend anhand von rotierenden Motoren M erfolgte, so lässt sich die Erfindung ohne weiteres auch für Linearmotoren anwenden. Luftgelagerte, besonders reibungsarme Linearmotoren sind sogar besonders interessante Anwendungsbeispiele, bei denen die Verfahren aus dem Stand der Technik versagen. Betrachtet man einen Linearmotor als einen rotierenden Motor, der mechanisch nur eine Umdrehung durchführen kann, so ist diese eine "mechanische Umdrehung" unterteilt in zahlreiche "magnetische Umdrehungen", entsprechend der Anzahl von Polpaaren auf der Magnetbahn des Linearmotors.

## Patentansprüche

1. Verfahren zur Bestimmung eines Kommutierungswinkels in einem permanent erregten Synchronmotor, wobei der Kommutierungswinkel (W) die Lage eines Rotors (R) innerhalb einer magnetischen Periode des Synchronmotors (M) angibt und zur feldorientierten Bestromung des Synchronmotors (M) verwendet wird, mit den Schritten
- Festlegen eines beliebigen Kommutierungswinkels (W) als Ausgangspunkt des Verfahrens,
- Einprägen eines Stromvektors (i) in den Motor unter Verwendung des zunächst beliebig festgelegten Kommutierungswinkels (W),
- Feststellen einer Lageabweichung (dP) des Rotors (R),
- Verändern des zur Bestromung verwendeten Kommutierungswinkels (W) mittels einer Reglerstruktur (PID), um der festgestellten Lageabweichung (dP) entgegen zu wirken, so dass nach einer Einschwingzeit der sich einstellende Kommutierungswinkel (W) dem tatsächlichen Kommutierungswinkel des Rotors (R) entspricht,
**dadurch gekennzeichnet, dass**
- bei der Feststellung der Lageabweichung (dP) des Rotors (R) eine Anfangsgeschwindigkeit (v0) des Rotors (R) berücksichtigt wird, indem als Lageabweichung (dP) die Abweichung von der aufgrund der Anfangsgeschwindigkeit (v0) und der Ausgangsposition (P0) zu erwartenden Position der Reglerstruktur (PID) zugeführt wird, die an ihrem Ausgang einen Kommutierungsoffset (W') zur Verfügung stellt.

2. Verfahren nach Anspruch 1, **dadurch gekennzeichnet, dass** die Anfangsgeschwindigkeit (v0) berücksichtigt wird, indem zur Differenz aus einer aktuellen Position (P) des Rotors (R) und dessen Anfangsposition (P0) das Produkt aus der seit dem Beginn des Verfahrens verstrichenen Zeit (TR) und der Anfangsgeschwindigkeit (v0) addiert wird, um die Lageabweichung (dP) zu erhalten, die angibt, wie weit der Rotor (R) von seiner aufgrund der Anfangsgeschwindigkeit (v0) und der Ausgangsposition (P0) zu erwarteten Lage abweicht.

3. Verfahren nach Anspruch 1 oder 2, **dadurch gekennzeichnet, dass** bei der Bestimmung der Lageabweichung (dP) eine die Anfangsgeschwindigkeit (v0) des Rotors (R) reduzierende Reibung berücksichtigt wird.

4. Verfahren nach einem der vorhergehenden Ansprüche, **dadurch gekennzeichnet, dass** der Betrag des Stromvektors (i) mit der Zeit zunimmt.

5. Verfahren nach Anspruch 4, **dadurch gekennzeichnet, dass** der Betrag des Stromvektors (i) bis zu einem Grenzwert zunimmt.

6. Verfahren nach einem der vorhergehenden Ansprüche, **dadurch gekennzeichnet, dass** die Lageabweichung (dP) des Rotors (R) mit Hilfe eines Positionsmessgerätes (E) festgestellt wird.

7. Verfahren nach einem der vorhergehenden Ansprüche, **dadurch gekennzeichnet, dass** zur Überwindung ungünstiger Ausgangspositionen (P0), in denen der eingeprägte Stromvektor (i) keine Wirkung zeigen kann, ein Störsignal (A) auf den Ausgang des Reglers (PID) geschaltet wird.

8. Verfahren nach Anspruch 7, **dadurch gekennzeichnet, dass** das Störsignal (A) einer Winkelrampe entspricht, die während eines Zeitintervalls auf den Ausgang des Reglers (PID) geschaltet wird.

## Claims

1. Method for determining a commutation angle in a permanently excited synchronous motor, wherein the commutation angle (W) indicates the position of a rotor (R) within a magnetic period of the synchronous motor (M), and is used for field-oriented energization of the synchronous motor (M), with the steps of
- specifying an arbitrary commutation angle (W) as the starting point of the method,
- impressing a current vector (i) onto the motor using the initially arbitrarily specified commutation angle (W),
- ascertaining a position deviation (dP) of the rotor (R),
- changing the commutation angle (W) used for energization by means of a controller structure (PID) in order to counteract the position deviation (dP) that has been ascertained, so that after a settling time, the commutation angle (W) which results corresponds to the actual commutation angle of the rotor (R),
**characterized in that**
- an initial speed (v0) of the rotor (R) is taken into account in ascertaining the position deviation (dP) of the rotor (R), **in that** the deviation from the position to be expected on the basis of the initial speed (v0) and the initial position (P0) is supplied as the position deviation (dP) to the controller structure (PID), which makes a commutation offset (W') available at its output.

2. Method according to Claim 1, **characterized in that** the initial speed (v0) is taken into account **in that** the product of the time that has passed since the beginning of the method (TR) and the initial speed (v0) is added to the difference between a current position (P) of the rotor (R) and its initial position (P0) in order to obtain the position deviation (dP) which indicates how far the rotor (R) deviates from its position to be expected on the basis of the initial speed (v0) and the initial position (P0).

3. Method according to Claim 1 or 2, **characterized in that** a friction reducing the initial speed (v0) of the rotor (R) is taken into account in determining the position deviation (dP).

4. Method according to one of the preceding claims, **characterized in that** the magnitude of the current vector (i) increases with time.

5. Method according to Claim 4, **characterized in that** the magnitude of the current vector (i) increases up to a limit value.

6. Method according to one of the preceding claims, **characterized in that** the position deviation (dP) of the rotor (R) is ascertained with the aid of a position measuring device (E).

7. Method according to one of the preceding claims, **characterized in that** an interfering signal (A) is added to the output of the controller (PID) in order to overcome unfavourable initial positions (P0) in which the impressed current vector (i) cannot show any effect.

8. Method according to Claim 7, **characterized in that** the interfering signal (A) corresponds to an angle ramp that is added during a time interval to the output of the controller (PID).

## Revendications

1. Procédé de détermination d'un angle de commutation dans un moteur synchrone à excitation permanente, l'angle de commutation (W) indiquant la position d'un rotor (R) à l'intérieur d'une période magnétique du moteur synchrone (M) et étant utilisé pour l'alimentation électrique à champ orienté du moteur synchrone (M), comprenant les étapes suivantes
- définition d'un angle de commutation (W) quelconque en tant que point initial du procédé,
- impression d'un vecteur de courant (i) dans le moteur en utilisant l'angle de commutation (W) défini initialement de manière quelconque,
- définition d'un écart de position (dP) du rotor (R),
- modification de l'angle de commutation (W) utilisé pour l'alimentation électrique au moyen d'une structure de régulation (PID) afin de contrer l'écart de position (dP) défini, de sorte qu'après un temps de transition, l'angle de commutation (W) qui s'établit correspond à l'angle de commutation effectif du rotor (R), **caractérisé en ce que**
- une vitesse initiale (v0) est prise en compte lors de la définition de l'écart de position (dP) du rotor (R) **en ce que** l'écart de position (dP) acheminé à la structure de régulation (PID) est l'écart par rapport à la position attendue du fait de la vitesse initiale (v0) et de la position initiale (P0) et celle-ci délivre à sa sortie un décalage de commutation (W').

2. Procédé selon la revendication 1, **caractérisé en ce que** la vitesse initiale (v0) est prise en compte en additionnant, à la différence entre une position actuelle (P) du rotor (R) et sa position initiale (P0), le produit du temps (TR) écoulé depuis le début du procédé et la vitesse initiale (v0) afin d'obtenir l'écart de position (dP) qui indique de quelle amplitude le rotor (R) s'écart de sa position attendue du fait de la vitesse initiale (v0) et de la position initiale (P0).

3. Procédé selon la revendication 1 ou 2, **caractérisé en ce qu'**un frottement qui réduit la vitesse initiale (v0) du rotor est pris en compte de la détermination de l'écart de position (dP).

4. Procédé selon l'une des revendications précédentes, **caractérisé en ce que** la valeur du vecteur de courant (i) augmente avec le temps.

5. Procédé selon la revendication 4, **caractérisé en ce que** la valeur du vecteur de courant (i) augmente jusqu'à une valeur limite.

6. Procédé selon l'une des revendications précédentes, **caractérisé en ce que** l'écart de position (dP) du rotor (R) est défini à l'aide d'un appareil de mesure de position (E).

7. Procédé selon l'une des revendications précédentes, **caractérisé en ce qu'**un signal parasite (A) est commuté à la sortie du régulateur (PID) en vue de corriger les positions initiales (P0) défavorables dans lesquelles le vecteur de courant (i) imprimé ne peut avoir aucun effet.

8. Procédé selon la revendication 7, **caractérisé en ce que** le signal parasite (A) correspond à une rampe d'angle qui est commutée sur la sortie du régulateur (PID) pendant un intervalle de temps.
